(19) Europäisches Patentamt
European Patent Office
Office européen des brevets

(11) **EP 1 764 578 A2**

(12) **EUROPÄISCHE PATENTANMELDUNG**

(43) Veröffentlichungstag:
**21.03.2007 Patentblatt 2007/12**

(51) Int Cl.:
***G01B 11/30*** *(2006.01)*

(21) Anmeldenummer: **06450132.3**

(22) Anmeldetag: **19.09.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **20.09.2005 AT 15462005**

(71) Anmelder: **Mondi Business Paper Services AG**
**3363 Ulmerfeld-Hausmening (AT)**

(72) Erfinder:
• **Schaffar, Gottfried**
**2081 Niederfladnitz (AT)**

• **Altenstrasser, Wolfgang**
**3300 Amstetten (AT)**
• **Drexler, Gerhard**
**3361 Aschbach Markt (AT)**
• **Amon, Hans**
**3363 Ulmerfeld-Hausmening (AT)**
• **Komenda, Jörg**
**1220 Wien (AT)**

(74) Vertreter: **Miksovsky, Alexander**
**Patentanwälte**
**Miksovsky & Pollhammer OEG,**
**Währingerstrasse 3**
**1096 Wien (AT)**

(54) **Verfahren und Vorrichtung zum Bestimmen der Krümmung einer Oberfläche eines Gegenstands, beispielsweise Papier oder Karton**

(57) Bei einem Verfahren und einer Vorrichtung zum Bestimmen der Krümmung der Oberfläche eines beispielsweise blatt- bzw. plattenförmigen Gegenstands, beispielsweise Papier oder Karton, sind die folgenden Schritte vorgesehen:
- Festlegen wenigstens eines Bezugspunkts (9) der Oberfläche des Gegenstands (2) und/oder Halten des Gegenstands (2) an dem Bezugspunkt,
- Bestimmen des Abstands wenigstens eines weiteren vom Bezugspunkt beabstandeten Punkts der Oberfläche des Gegenstands zu einem Sensor (4), der in einem vorbestimmten oder vorbestimmbaren Abstand von einer den Bezugspunkt einhaltenden Ebene liegt, und
- Ermitteln der Krümmung der Oberfläche des Gegenstands aus dem Abstand des weiteren Punkts und der Lage des Bezugspunkts (9), insbesondere unter Zugrundelegung eines vorgegebenen Modells einer Krümmung der Oberfläche des Gegenstands, wobei als Modell einer Krümmung ein Rotationskörper bzw. ein Teilbereich davon, insbesondere eine kreiszylindrische Oberfläche gewählt wird, wodurch eine einfache und rasche sowie zuverlässige Ermittlung einer Krümmung bzw. Wölbung eines flächigen Gegenstands, insbesondere Papier, erzielbar ist. (Fig. 1)

Fig. 1

**EP 1 764 578 A2**

**Beschreibung**

Die vorliegende Erfindung bezieht sich auf ein Verfahren sowie eine Vorrichtung zum Bestimmen der Krümmung der Oberfläche eines beispielsweise blatt- bzw. plattenförmigen Gegenstands, beispielsweise Papier oder Karton, sowie auf eine Verwendung eines derartigen Verfahren und einer derartigen Vorrichtung.

Im Zusammenhang mit der Herstellung sowie Be- und Verarbeitung von flächigen, beispielsweise blatt- bzw. plattenförmigen Gegenständen, beispielsweise Papier oder Karton ist sowohl nach bzw. bei einer Herstellung als auch bei einem Einsatz oftmals eine genaue Kenntnis der Flachheit bzw. Ebenheit eines derartigen flächigen Gegenstands günstig bzw. erforderlich, um einerseits einen flächigen Gegenstand entsprechend hoher Güte bzw. Qualität zur Verfügung stellen zu können, als auch bei einem gegebenenfalls erkannten Vorliegen eines Abweichens von einer ebenen Form bzw. Gestalt, insbesondere bei Vorliegen einer bestimmten Krümmung oder Wölbung, entweder Abhilfe während des Herstellungsvorgangs zu schaffen oder eine derartige festgestellte Krümmung oder Wölbung in einem folgenden Be- bzw. Verarbeitungsvorgang berücksichtigen zu können.

Während die nachfolgende Beschreibung im wesentlichen auf die Feststellung der Krümmung bzw. Wölbung von Papier oder einem Papier ähnlichen, blatt- bzw. plattenförmigen Gegenstand zu Erläuterungszwecken gerichtet ist, ist anzumerken, daß ähnlich wie bei dem nachfolgend beschriebenen Papier eine Feststellung einer Krümmung bzw. Wölbung auch für andere Gegenstände, die beispielsweise flächig, blatt- bzw. plattenförmig sein können, möglich bzw. erforderlich ist, wobei beispielsweise auf Folien, beispielsweise Kunststoffolien, mehrlagige, flächige Gegenstände, beispielsweise mit einer Kunststoffolie beschichtetes Papier oder Kartonelement, Karton oder ähnliche Materialien verwiesen werden kann, welche eine relativ große Erstreckung in zwei Dimensionen aufweisen.

Im Zusammenhang mit der Handhabung von Papier oder einem Papier ähnlichen Gegenständen ist es beispielsweise im Rahmen einer Kopiervorrichtung bekannt, ein kopiertes Papier nach Fertigstellung des Papier- bzw. Druckvorgangs zu behandeln, um eine gegebenenfalls vorhandene Krümmung oder Wölbung zu beseitigen bzw. zu verringern, wobei beispielsweise auf die US-B 5 515 152 verwiesen wird. Im Zusammenhang mit einer Kopiervorrichtung ist weiters, beispielsweise aus der US-B 4 951 935 bekannt, bei Feststellung eines Stapels von kopiertem Papier, welches eine hohe bzw. große Krümmung aufweist, beispielsweise eine Fortsetzung des Kopiervorgangs zu unterbrechen. Weiters ist beispielsweise der US-B 6 668 155 ein System sowie ein Verfahren zur Feststellung der Krümmung eines kopierten Papiers insbesondere an einer voreilenden Kante zu entnehmen, wobei bei Feststellung einer Krümmung gleichzeitig Gegenmaßnahmen zur Erzielung eines flachen Papiers getroffen werden.

Weiters ist beispielsweise aus der EP-B 0 816 931 ein Sensorsystem zum Prüfen der Eigenschaften von Papier bekannt geworden, wobei auf einen Papierstapel eine mechanische Kraft ausgeübt wird, um nach Ausübung der Kraft Auswirkungen derselben auf dem Papierblatt festzustellen.

Zur Feststellung der Krümmungseigenschaften einer Papierbahn wird darüber hinaus beispielsweise in der WO 00/56976 vorgeschlagen, eine Papierbahn zu schneiden oder die Schnittkanten bzw. -ränder im Hinblick auf ein Aufbiegen bzw. Einrollen zu überprüfen.

Gemäß der US-B 5 394 247 wird darauf abgezielt, eine Papierkrümmung durch eine Feststellung der Faserorientierung innerhalb des Papiers festzustellen bzw. vorauszusagen, wobei der Durchtritt von Licht durch das Papier zur Feststellung der Faserorientierung eingesetzt wird.

Aus der US-A 2004/0243270 ist ein Verfahren zum Modellieren, Voraussagen und Regeln bzw. Steuern einer Krümmung von Papier bekannt geworden, wobei unter Einsatz eines Rechenmodells an einer Papiermaschine Betriebsparameter der Papiermaschine zur Erzielung einer gewünschte Krümmung bzw. Wölbung verändert werden.

Weiters ist aus der US-B 4 747 911 eine Vorrichtung zum Messen einer Krümmung eines Papierblatts bekannt geworden, wobei das Papierblatt in einer aufgehängten Form aufgefächerten Laserstrahlen ausgesetzt wird und aus den Schattenbildern, welche durch das gekrümmte Papier bewirkt werden, auf eine Krümmung bzw. Wölbung des Papier rückgeschlossen wird.

Aus der US-PS 4 926 358 A ist ein System zum Steuern bzw. Kontrollieren von Krümmungen eines Papiers bekannt geworden, wobei zwei Abstandssensoreinheiten das Papier beleuchten und eine Reflexion von dem Papier erhalten, um das Ausmaß und eine Richtung einer Krümmung des Papiers zu erfassen. Darüber hinaus ist ein Papiergrößensensor vorgesehen, wobei die eine Krümmung korrigierende Vorrichtung Krümmungen auf der Basis des Ausmaßes und der Richtung der erfaßten Krümmung korrigieren.

Der US 2005/0097950A ist ein Test zum Messen einer Krümmungstendenz von Papier in einem Laserdrucker zu entnehmen, wobei Papier von einer Papierherstellungsmaschine geschnitten und rasch auf Standardbedingungen getrocknet wird, worauf es durch eine Vorrichtung geführt wird, welche einen im wesentlichen vertikal orientierten Klemmspalt aufweist, in welchem das Papier geklemmt wird. Durch Anordnung eines im wesentlichen vertikal orientierten Klemmspalts und Klemmen lediglich einer Seite wird das Krümmungsverhalten durch die auf das zu überprüfende Papier wirkende Schwerkraft beeinflußt, so daß zuverlässige Aussagen betreffend die tatsächliche Krümmung nicht getroffen werden können.

Sämtlichen der oben genannten bekannten Verfahren oder Vorrichtungen zur Bestimmung einer Krümmung von Papier ist gemeinsam, daß diese teilweise übermäßig aufwendig und kompliziert sind, und für den Fall, daß eine mechanische Beanspruchung des zu vermessenden Papiers stattfindet, eine gegebenenfalls vorhandene Krümmung bzw. Wölbung dementsprechend beeinflußt wird. Weiters wird im wesentlichen vorausgesetzt, daß eine Krümmung bzw. Wölbung des Papiers lediglich entlang einer Achse bzw. in einer Richtung vorliegt. Für den Fall, daß eine Krümmung bzw. Wölbung in mehreren voneinander abweichenden Richtung vorliegen sollte, lassen sich in den bekannten Verfahren und Vorrichtung keine eindeutigen Aussagen über den tatsächlichen Zustand des Papiers bzw. allgemein des zu vermessenden bzw. zu beurteilenden flächigen, blatt- bzw. plattenförmigen Gegenstands erzielen.

Die vorliegende Erfindung zielt darauf ab, ein Verfahren sowie eine Vorrichtung der eingangs genannten Art zur Verfügung zu stellen, mit welchen es in einfacher und zuverlässigerweise gelingt, berührungslos und rasch eine gegebenenfalls vorhandene Krümmung bzw. Wölbung einer Oberfläche eines beispielsweise blatt- bzw. plattenförmigen Gegenstands, beispielsweise von Papier oder Karton zu ermitteln.

Zur Lösung dieser Aufgaben ist ein Verfahren zum Bestimmen der Krümmung einer Oberfläche eines beispielsweise blatt- bzw. plattenförmigen Gegenstands, beispielsweise Papier oder Karton, im wesentlichen umfassend die folgenden Schritte:

- Festlegen wenigstens eines Bezugspunkts der Oberfläche des Gegenstands und/oder Halten des Gegenstands an dem Bezugspunkt,
- Bestimmen des Abstands wenigstens eines weiteren vom Bezugspunkt beabstandeten Punkts der Oberfläche des Gegenstands zu einem Sensor, der in einem vorbestimmten oder vorbestimmbaren Abstand von einer den Bezugspunkt einhaltenden Ebene liegt, und
- Ermitteln der Krümmung der Oberfläche des Gegenstands aus dem Abstand des weiteren Punkts und der Lage des Bezugspunkts, insbesondere unter Zugrundelegung eines vorgegebenen Modells einer Krümmung der Oberfläche des Gegenstands,

wobei als Modell einer Krümmung ein Rotationskörper bzw. ein Teilbereich davon, insbesondere eine kreiszylindrische Oberfläche gewählt wird.

Durch ein Festlegen wenigstens eines Bezugspunkts des beispielsweise flächigen Gegenstands und/oder Halten des Gegenstands an dem Bezugspunkt und Bestimmen des Abstands wenigstens eines weiteren vom Bezugspunkt beabstandeten Punkts der Oberfläche des Gegenstands zu einem Sensor läßt sich unter Zugrundelegung von wenigstens einem vorgegebenen Modell einer Krümmung bzw. Wölbung des flächigen Gegenstands eine eindeutige Aussage über das tatsächliche Ausmaß einer Krümmung aus dem ermittelten Unterschied zwischen dem gemessenen Abstand des weiteren Punkts und der Lage des Bezugspunkts ermitteln. Im Zusammenhang mit einer Auswertung können unterschiedliche Modelle einer Krümmung herangezogen werden, und es können die Übereinstimmung zwischen einem derartigen Modell und dem tatsächlich ermittelten Abstand des Punkts sowie der Position des Bezugspunkts für eine eindeutige Zuordnung einer tatsächlichen vorliegenden Wölbung bzw. Krümmung der Oberfläche des Gegenstands, beispielsweise eines Papierblatts, sowie deren Parameter gefunden werden.

Erfindungsgemäß wird die Krümmung bzw. Wölbung des flächigen Gegenstand aus dem ermittelten Abstand von wenigstens einem Punkt relativ zu einem Bezugspunkt unter Zugrundlegung eines vorgegebenen Modells einer Krümmung ermittelt, wobei vorgeschlagen wird, daß als Modell einer Krümmung ein Rotationskörper bzw. ein Teilbereich davon, insbesondere eine kreiszylindrische Oberfläche gewählt wird. Derartige Modelle unter Heranziehung einer Oberfläche eines Rotationskörpers bzw. eines Teilbereichs davon, insbesondere einer kreiszylindrischen Oberfläche, ermöglichen nicht nur eine entsprechend zuverlässige und genaue Aussage über das tatsächliche Krümmungsverhalten sowie dessen Parameter, beispielsweise Achse bzw. Orientierung und Krümmungsradius, sondern sind wenigstens teilweise durch Industriestandards oder Normen begründet, gemäß welchen insbesondere zur Klassifizierung der Güte bzw. Qualität der Oberflächenbeschaffenheit bzw. Oberfläche eines Gegenstands, beispielsweise von Papier, als Parameter beispielsweise der Krümmungsradius derartiger Rotationskörper vorgegeben sind. Weiters wurde durch Untersuchungen sowie beispielsweise unter Heranziehung des eingangs genannten Standes der Technik festgestellt, daß tatsächlich die Annahme von Rotationskörpern oder Teilbereichen in der überwiegenden Mehrzahl von Fällen bei Untersuchung bzw. Bestimmung der Krümmung eines Gegenstands, insbesondere von Papier, eine zuverlässige Annäherung an die tatsächliche Form eines derartigen Gegenstands zuläßt. Weitere abgewandelte Oberflächen, welche einem Fit- bzw. Anpassungsverfahren zugrunde gelegt werden, könnten beispielsweise entlang einer Geraden bewegte Parabeln sein. Es lassen somit auch geometrisch komplizierte Formen einer Krümmung bzw. Wölbung, welche sich aus einer Kombination einer Mehrzahl von Rotationskörpern ergeben, entsprechend einfach und zuverlässig handhaben bzw. feststellen.

Zur Verbesserung der Präzision wird gemäß einer bevorzugten Ausführungsform vorgeschlagen, daß eine Bestimmung des Abstands der Oberfläche des Gegenstands zu jeweils einem Sensor an einer Mehrzahl von über die Oberfläche des Gegenstands verteilten Punkten bzw. Positionen vorgenommen wird. Durch Ermitteln des Abstands an einer Mehrzahl von über die Oberfläche des Gegenstands verteilten Punkten bzw. Positionen lassen sich insbesondere für den Fall, daß eine nicht gleichmäßige bzw. gleichförmige Krümmung des zu untersuchenden Gegenstands vorliegen sollte, präzisiere Aussagen über die tatsächliche Form bzw. Formgebung des flächigen Gegenstands zur Verfügung stellen. Darüber hinaus läßt sich bei Heranziehen einer Mehrzahl von Punkten bzw. Positionen die Auswahl der zu vergleichenden Modelle reduzieren, da aus der relativen Lage bzw. dem relativen Abstand einzelner Punkte unmittelbar auf die Basisform des zugrunde liegenden bzw. vorzugebenden Modells geschlossen werden kann, und nach einer entsprechend vereinfachten Auswahl des zugrunde liegenden bzw. vorgegebenen Modells eine exakte und einfache Bestimmung der Parameter der Krümmung bzw. Wölbung unter Heranziehung des vorgegebenen Modells erzielbar ist.

Da üblicherweise Randbereiche des Gegenstands bei Vorliegen einer Krümmung bzw. Wölbung desselben den größten Abstand von einer idealen flachen bzw. ebenen Gestalt aufweisen, wird gemäß einer weiters bevorzugten Ausführungsform vorgeschlagen, daß ein Bestimmen des Abstands der Oberfläche des Gegenstands an einer Mehrzahl von Punkten entlang der Randbereiche des Gegenstands vorgenommen wird.

Während unter der Annahme von einfachen geometrischen Modellen zur Ermittlung der Krümmung bzw. Wölbung mit einer Abstandsermittlung bzw. einer vergleichsweise geringen Anzahl von Punkten, welche über die Fläche des zu vermessenden Gegenstands verteilt sind, das Auslangen gefunden werden kann, ist insbesondere bei komplizierte Formen bzw. Gestalten aufweisenden Krümmungen die Ermittlung an einer Mehrzahl von Punkten bzw. Positionen erforderlich, um entsprechend detaillierte Aussagen treffen zu können. Weiters kann sich insbesondere für den Fall, daß komplizierte Formen aufweisende Wölbungen bzw. Krümmungen erwartet werden, eine ungleichmäßige Verteilung der Positionen bzw. Punkte, an welchen jeweils eine Abstandsmessung vorgenommen wird, als günstig erweisen, so daß beispielsweise Punkte bzw. Positionen mit unterschiedlichem relativen Abstand zueinander als auch unterschiedlichem Abstand zum Bezugspunkt zur Beurteilung der Krümmung herangezogen werden.

Falls die exakte Form des Gegenstands nicht vorab bekannt bzw. bestimmbar ist, und mit einer für unterschiedliche Formen einsetzbaren Vorrichtung das erfindungsgemäße Verfahren durchgeführt werden soll, wird gemäß einer weiters bevorzugten Ausführungsform vorgeschlagen, daß bei Feststellung eines Abstands außerhalb eines vorgegebenen Schwellwerts oder einer vorgegebenen Bandbreite der ermittelte Abstand beispielsweise zu einer Ermittlung eines Vorzeichens und/oder Information der Krümmung der Oberfläche des Gegenstands herangezogen wird. Somit lassen sich Behelfswerte insbesondere für stark von einer vorgegebenen bzw. angenommenen Form abweichende Krümmungen der Oberfläche des Gegenstands ermitteln. Weiters wird beispielsweise sichergestellt, daß für den Fall, daß eine kleinere Fläche des Gegenstands vermessen werden soll, bei gleichzeitiger Ermittlung von Meßergebnissen an einer Vielzahl von Sensorpositionen die Resultate derjenigen Sensoren, welche außerhalb eines vorgegebenen Schwellwerts bzw. einer vorgegebenen Bandbreite für verwendbare Meßwerte liegen, von einer weiteren Verarbeitung zur Ermittlung der Krümmung des Gegenstands ausgeschieden werden, da diese in diesem Fall außerhalb des tatsächlich zu vermessenden Gegenstands liegen. Weiters kann durch ein Ausscheiden von Meßwerten, welche außerhalb eines vorgegebenen Schwellwerts bzw. einer vorgegebenen Bandbreite liegen, sichergestellt werden, daß beispielsweise Resultate von schadhaften Sensoren nicht zur Auswertung herangezogen werden.

Zum Durchführen etwaiger Korrekturen oder Kalibrierungen wird gemäß einer weiters bevorzugten Ausführungsform des erfindungsgemäßen Verfahrens vorgeschlagen, daß vor Durchführung der Abstandsmessung weitere Parameter des Gegenstands, beispielsweise Temperatur, Bewegung oder dgl. festgestellt werden. Derart wird beispielsweise sichergestellt, daß Vergleichsmessungen jeweils bei gleicher Temperatur durchgeführt werden oder daß bei einer Auswertung eine Korrektur unter Berücksichtigung einer gegebenenfalls unterschiedlichen Temperatur vorgenommen werden kann. Bei Feststellung einer Bewegung des Papiers wird beispielsweise sichergestellt, daß nicht Zusatzeinflüsse eine Verfälschung der Meßergebnisse einer tatsächlich ermittelten Krümmung bewirken.

Während es mit dem erfindungsgemäßen Verfahren ohne weiteres möglich ist, die Krümmung bzw. Wölbung eines einzelnen Blatts bzw. einer einzigen Lage eines flächigen Gegenstands zu ermitteln, wird beispielsweise bei der Ermittlung der Krümmung von Papier dieses üblicherweise in einem aus mehreren Blättern bzw. Lagen bestehenden Stapel angeordnet und einer Beurteilung unterzogen. In diesem Zusammenhang wird vorgeschlagen, daß eine Mehrzahl von Gegenständen übereinander in einem Stapel angeordnet wird und daß eine Feststellung des Abstands von jeweils wenigstens einem Punkt an den Oberflächen des Stapels der Gegenstände vorgenommen wird, wie dies einer weiters bevorzugten Ausführungsform des erfindungsgemäßen Verfahren entspricht. Durch ein Vermessen von beiden Seiten des Stapels kann somit auch Aufschluß darüber gegeben werden, ob beispielsweise in einem derartigen Stapel, welcher eine Mehrzahl von zu überprüfenden Gegenständen enthält, an der Ober- und Unterseite bzw. Vorder- und Rückseite des Stapels ein unterschiedliches und gegebenenfalls entgegengesetztes Krümmungsverhalten vorliegt.

Zur Ermittlung der Parameter des vorgegebenen bzw. zugrunde gelegten Modells unter Berücksichtigung der jeweiligen Abstände, insbesondere einer Mehrzahl von Punkten, welche über die Fläche des zu beurteilenden Gegenstands verteilt sind, wird gemäß einer weiters bevorzugten Ausführungsform vorgeschlagen, daß die Krümmung durch ein Fitten der ermittelten Abstände an das vorgegebene Modell, beispielsweise mit einem Verfahren der kleinsten Quadrate vorgenommen wird. Bei komplizierteren Oberflächen könnten beispielsweise andere bzw. zusätzliche Funktionenklassen, wie beispielsweise 2-D-Fourier-Oberfläche oder Splines, herangezogen werden.

Für eine vorangehende Auswahl des vorgegebenen bzw. anzupassenden Modells sowie der Parameter desselben wird weiters vorgeschlagen, daß Parameter des anzupassenden Modells durch numerische Verfahren, beispiels-weise ein Montecarlo-Verfahren, ermittelt werden, wie dies einer bevorzugten Ausführungsform des erfindungsgemäßen Verfahren entspricht.

Zur Lösung der eingangs genannten Aufgaben umfaßt darüber hinaus eine Vorrichtung zum Bestimmen der Krümmung der Oberfläche eines beispielsweise blatt- bzw. plattenförmigen Gegenstands, beispielsweise Papier oder Karton, im wesentlichen:

- eine Halterung zur Aufnahme des Gegenstands und/oder zur Festlegung eines Bezugspunkts der Oberfläche des flächigen Gegenstands;
- wenigstens einen Sensor zur Ermittlung des Abstands eines vom Bezugspunkt verschiedenen Punkts der Oberfläche des Gegenstands zu dem Sensor, der in einem vorbestimmten oder vorbestimmbaren Abstand von einer den Bezugspunkt enthaltenden Ebene liegt; und
- Mittel zum Ermitteln des Abstands zwischen dem Punkt auf der Oberfläche des Gegenstands und dem Sensor sowie zum Ermitteln der Krümmung der Oberfläche des Gegenstands aus dem ermittelten Abstand und der Lage des Bezugspunkts, insbesondere unter Zugrundelegung eines vorgegebenen Modells einer Krümmung,

wobei als Modell einer Krümmung ein Rotationskörper bzw. ein Teilbereich davon, insbesondere eine kreiszylindrische Oberfläche gewählt ist.

Es läßt sich somit mit einer konstruktiv einfachen Vorrichtung, welche eine Halterung bzw. Festlegung des Gegenstands oder eines Bezugspunkts desselben erlaubt, und auch mit entsprechend genauen Sensoren das Auslangen finden, wobei die Mittel zum Ermitteln des Abstands als auch zum Übermitteln der Krümmung von für sich gesehen bekannten Auswerte- bzw. Recheneinheiten gebildet sein können.

Wie oben bereits angedeutet, läßt sich ein präziseres Meßergebnis durch Vorsehen einer Messung an einer Mehrzahl von über die Oberfläche des Gegenstands verteilten Punkten bzw. Positionen erzielen, so daß gemäß einer bevorzugten Ausführungsform die erfindungsgemäße Vorrichtung derart ausgebildet ist, daß eine Mehrzahl von Sensoren in einer gemeinsamen Halterung aufgenommen ist. Durch Anordnung einer Mehrzahl von Sensoren in einer gemeinsamen Halterung läßt sich die gegenseitige Position der einzelnen Sensoren zuverlässig feststellen und eindeutig festlegen, so daß gegebenenfalls erforderliche Korrekturen im Hinblick auf die Position der einzelnen Sensoren nicht erforderlich werden.

Zur weiteren Präzisierung des ermittelten Meßergebnisses und zur gegebenenfalls erforderlichen Vornahme von Korrekturen oder einer Kalibrierung wird gemäß einer weiters bevorzugten Ausführungsform vorgeschlagen, daß wenigstens ein Sensor zur Bestimmung zusätzlicher Parameter des Gegenstands, wie beispielsweise Temperatur, Bewegung oder dgl., vorgesehen ist.

Um mit einer geringen Anzahl von Sensoren gegebenenfalls größere Erstreckungen aufweisende flächige Gegenstände zu überprüfen bzw. vermessen zu können, wird gemäß einer weiters bevorzugten Ausführungsform vorgeschlagen, daß wenigstens ein Sensor relativ zur Oberfläche des Gegenstands bewegbar ist. Ein derartiger Sensor kann beispielsweise zeilen- bzw. spaltenweise den zu vermessenden Gegenstand abtasten und wiederum an einer Mehrzahl von Punkten bzw. Positionen den jeweiligen Abstand zu dem zu vermessenden Gegenstand bestimmen. Weiters könnte ein beispielsweise zeilen-oder balkenförmiger Sensor verwendet werden, welcher relativ zur Oberfläche eines Gegenstands bewegt wird, so daß wiederum an einer Vielzahl von Positionen bzw. Punkten der jeweilige relative Abstand zur Oberfläche des zu vermessenden Gegenstands ermittelt wird, und darauf in weiterer Folge die Krümmung bzw. Wölbung des Gegenstands bestimmt wird. Bei derartigen bewegten Sensoren muß jedoch zur Auswertung auch die jeweilige Relativposition des Sensors an den einzelnen Punkten bzw. Positionen entsprechend genau feststellbar sein.

Zur Ermittlung des Abstands der jeweiligen Punkte der Oberfläche des zu vermessenden Gegenstands wird gemäß einer weiters bevorzugten Ausführungsform vorgeschlagen, daß als Sensoren kapazitive Sensoren, Lasersensoren auf einem Laufzeitprinzip, Lasersensoren auf einem Triangulationsprinzip, Ultraschallsensoren, induktive Sensoren, Videokameras oder dgl. vorgesehen sind. Eine Auswahl eines einzusetzenden Sensors kann beispielsweise unter Heranziehung der Abmessung des Gegenstands, der zu erzielenden erforderlichen Genauigkeit, der Geschwindigkeit des Auswerteverfahrens unter Heranziehung der zur Durchführung der Messung erforderlichen Zeitdauer oder dgl. auf Basis von allgemein bekannten Auswahlkriterien für die unterschiedlichen, für sich gesehen bekannten Sensoren erfolgen.

Wie oben bereits angedeutet, lassen sich das erfindungsgemäße Verfahren sowie die erfindungsgemäße Vorrichtung im Zusammenhang mit einer Mehrzahl von unterschiedlichen, beispielsweise blatt- bzw. plattenförmigen Gegenständen zur Bestimmung und Ermittlung der Krümmung bzw. Wölbung der Oberfläche derartiger Gegenstände einsetzen. Erfindungsgemäß wird beispielsweise vorgeschlagen, das erfindungsgemäße Verfahren sowie eine erfindungsgemäße Vorrichtung im Rahmen eines Papier- oder Kartonherstellungsprozesses, beispielsweise zur Qualitätssicherung einzusetzen. In diesem Zusammenhang können das erfindungsgemäße Verfahren sowie die erfindungsgemäße Vorrichtung einem Papierherstellungsprozeß nachgeschaltet werden, so daß beispielsweise stichprobenartig einzelne hergestellte Papier- oder Kartonelemente im Hinblick auf ihre Krümmung oder Wölbung untersucht werden, um gegebenenfalls erforderliche Korrekturen oder Änderungen von Parametern bei der Papierherstellung vorzuschlagen, um Abweichungen von einer vorgegebenen Form des unmittelbar fertiggestellten Papiers oder Kartons von einem vorgegebenen Standard oder einem Sollwert verringern zu können.

Alternativ oder zusätzlich wird ein Einsatz des erfindungsgemäßen Verfahren sowie einer erfindungsgemäßen Vorrichtung vor einem Einbringen bzw. Zuführen von Papier in einen nachfolgenden Be- bzw. Verarbeitungsvorgang, beispielsweise vor einem nachgeschalteten Druck- oder Kopiervorgang vorgeschlagen, so daß eine einfache und zuverlässige Prüfung beispielsweise von Papier vor einem Einbringen bzw. Zuführen in eine nachfolgenden Be- bzw. Verarbeitungsvorrichtung vorgenommen werden kann, um beispielsweise Beschädigungen einer nachgeschalteten Druck- oder Kopiervorrichtung zu vermeiden, oder unter Berücksichtigung einer festgestellten Krümmung oder Wölbung entsprechende Parameter der nachgeschalteten Maschine zur Erzielung eines gewünschten Ergebnisses beeinflussen zu können.

Die Erfindung wird nachfolgend anhand von in der beiliegenden Zeichnung schematisch dargestellten Ausführungsbeispielen des erfindungsgemäßen Verfahrens sowie erfindungsgemäßer Vorrichtungen zur Durchführen des erfindungsgemäßen Verfahren näher erläutert. In dieser zeigen:

Fig. 1 eine schematische Ansicht einer ersten Ausführungsform einer erfindungsgemäßen Vorrichtung zur Durchführung des erfindungsgemäßen Verfahrens;

Fig. 2 eine schematische Ansicht einer abgewandelten Ausführungsform einer erfindungsgemäßen Vorrichtung zur Durchführung des erfindungsgemäßen Verfahrens;

Fig. 3 eine schematische Ansicht einer Anordnung einer Mehrzahl von Sensoren einer erfindungsgemäßen Vorrichtung zur Durchführung des erfindungsgemäßen Verfahrens;

Fig. 4 eine schematische Darstellung einer abgewandelten Ausführungsform einer Anordnung von einer Mehrzahl von unterschiedlichen Sensoren einer erfindungsgemäßen Vorrichtung zur Durchführung des erfindungsgemäßen Verfahren;

Fig. 5 ein schematisches Flußdiagramm einer Ausführungsform des erfindungsgemäßen Verfahrens;

Fig. 6 eine schematische Darstellung einer ermittelten Krümmung eines flächigen Gegenstands, beispielsweise eines Papierblatts, wobei zur Verdeutlichung die Krümmung übertrieben dargestellt ist; und

Fig. 7 eine zu Fig. 6 ähnliche Darstellung einer ermittelten Krümmung eines flächigen Gegenstands, wobei eine komplizierte Krümmungsform ermittelt wurde.

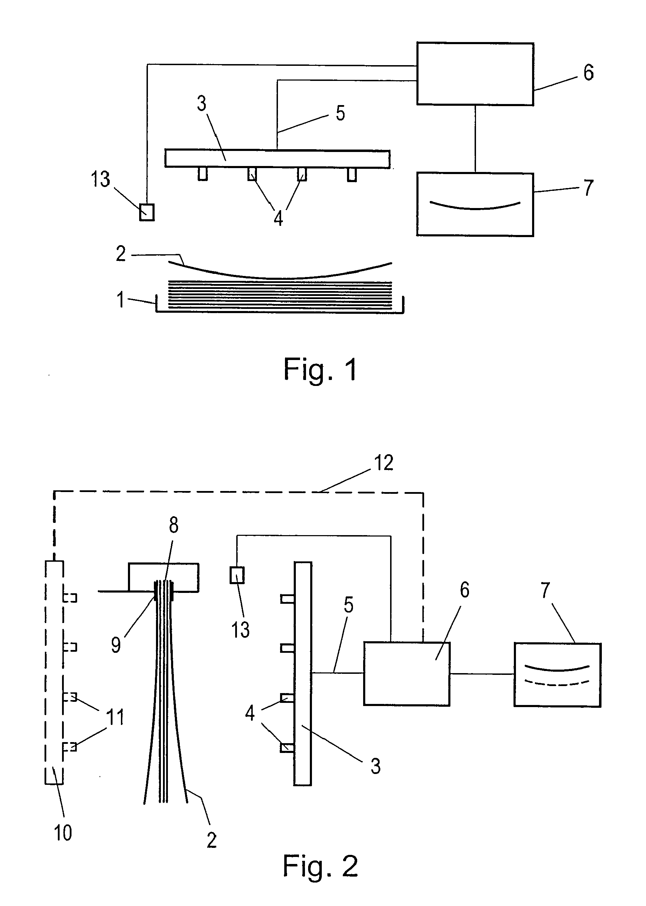

In Fig. 1 ist schematisch eine erste Ausführungsform einer Vorrichtung zur Ermittlung bzw. Bestimmung der Krümmung bzw. Wölbung der Oberfläche eines beispielsweise blatt- bzw. plattenförmigen Gegenstands dargestellt, wobei, wie bereits eingangs angeführt, die nachfolgende Beschreibung der Einfachheit halber und ohne Beschränkung des Anwendungsbereichs auf die Ermittlung der Krümmung eines Papierblatts bzw. eines Stapels von Papierblättern gerichtet ist.

In der in Fig. 1 dargestellten Ausführungsform ist allgemein mit 1 eine schalen- bzw. tablettartige Halterung für mit 2 bezeichnete Papierblätter dargestellt, wobei angedeutet ist, daß das oberste Papierblatt 2 eine zur Verdeutlichung vergleichsweise große Krümmung aufweist.

In Abstand von der Halterung 1 und dem darauf aufgenommenen Papier 2 ist eine Halterung 3 für eine Mehrzahl von mit 4 bezeichneten Sensoren vorgesehen, wobei ein Abstützung zur Positionierung und Festlegung der Halterung 3 und der Sensoren 4 nicht gezeigt ist. Die Sensoren 4 sind über eine schematisch mit 5 angedeutete Leitung mit einer Auswertung-und Recheneinheit 6 gekoppelt, welche als Mittel zum Ermitteln des Abstands zwischen den einzelnen Sensoren 4 und den jeweiligen Punkten auf der Oberfläche des Papierblatts bzw. obersten Papierblatts 2 dient, wie dies nachfolgend im Detail erörtert werden wird.

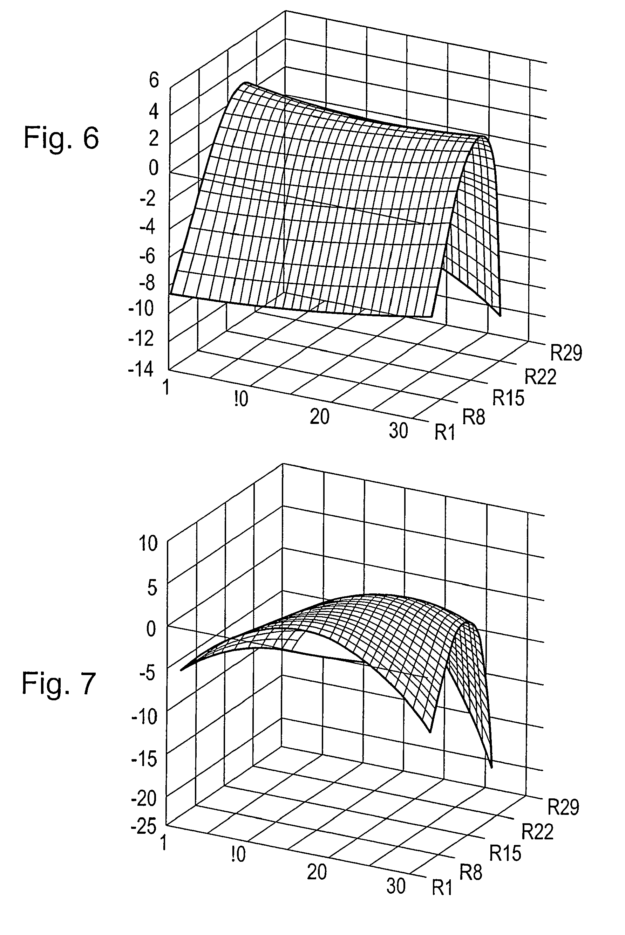

Nach einer Auswertung zur Ermittlung der Krümmung der Oberfläche des Gegenstands bzw. Papiers, insbesondere unter Zugrundelegung eines vorgegebenen Modells einer Krümmung des Gegenstands bzw. Papiers 2, wie dies ebenfalls im Detail nachfolgend erörtert werden wird, erfolgt beispielsweise auf einer schematisch mit 7 angedeuteten Anzeigevorrichtung eine Darstellung der ermittelten Form der Krümmung des Papierblatts, wobei Beispiele hiefür nachfolgend in Fig. 6 und 7 angedeutet sind. Darüber hinaus können auf der Anzeigevorrichtung 7 entsprechende zusätzliche Anzeigen oder Mitteilungen betreffend die ermittelten Parameter der Krümmung und somit beispielsweise betreffend die Qualität und Güte des untersuchten Gegenstands bzw. Papiers dargestellt bzw. angezeigt werden.

In Fig. 2 ist eine abgewandelte Ausführungsform dargestellt, wobei wiederum eine Mehrzahl von mit 2 bezeichneten Papierblättern an einem an einem oberen Rand 8 vorgesehenen Punkt durch eine zwingen- bzw. klemmenartige Vorrichtung, welche allgemein mit 9 bezeichnet ist, festgelegt wird, wobei über die klemmen- bzw. zwingenartige Vorrichtung 9 ein fixer Bezugspunkt des Papierblatts 2 bzw. der Mehrzahl von Papierblättern 2 festgelegt wird.

Ähnlich wie bei der Ausführungsform gemäß Fig. 1 ist auch in Fig. 2 eine wiederum mit 3 bezeichnete Halterung zur Aufnahme einer Mehrzahl von Sensoren 4 vorgesehen bzw. angedeutet, wobei wiederum über eine Verbindungsleitung 5 eine Kopplung mit der Auswertungs- bzw. Recheneinheit 6 und in weiterer Folge mit der wiederum mit 7 bezeichneten Anzeigeeinheit erfolgt.

Anstelle der in Fig. 2 gesehenen Vielzahl von Sensoren 4 kann unter Berücksichtigung der Tatsache, daß durch die klemmen- bzw. zwingenartige Vorrichtung 9 ein fixer Bezugspunkt des Papiers 2 eingestellt wird, mit einem einzigen Sensor das Auslangen gefunden werden, wenn ein vorgegebenes Modell einer Krümmung des flächigen Gegenstands bzw. Papiers 2 zugrunde gelegt wird, wobei dies beispielsweise von einem Kreiszylinder bzw. elliptischen Zylinder gebildet sein kann, wie dies nachfolgend im Detail erörtert werden wird und wie dies die Grundlage beispielsweise von Industriestandards zur Festlegung der Güte von Papier ist.

Bei der in Fig. 2 dargestellten Ausführungsform ist darüber hinaus strichliert angedeutet, daß neben der Halterung 3 mit den Sensoren 4, die zu einer Oberfläche bzw. einem obersten Blatt 2 des Stapels gerichtet ist, auch auf der Rückseite bzw. gegenüberliegenden Oberfläche eine mit 10 bezeichneten Halterung vorgesehen ist, in welcher wiederum eine Mehrzahl von mit 11 bezeichneten Sensoren aufgenommen ist. Auch diese Sensoren 11 sind über eine Verbindungsleitung 12 wiederum mit der Rechen- bzw. Auswerteeinheit 6 als Mittel zum Ermitteln der Krümmung des flächigen Gegenstands bzw. Papiers 2 verbunden, so daß auch in der Anzeigeeinheit 7 eine Darstellung der Krümmung der Rückseite möglich wird, wie dies ebenfalls strichliert auf der Anzeigeeinheit 7 angedeutet ist.

Das Vorsehen von Sensoren 4 bzw. 11 auf beiden Seiten, insbesondere eines Stapels von Papier 2 läßt hiebei Rückschlüsse zu, inwieweit bei einer Anordnung einer Mehrzahl von flächigen Gegenständen, beispielsweise Papierblätter 2, diese in einem Stapel auffächern.

Sowohl bei der Ausführungsform gemäß Fig. 1 als auch Fig. 2 ist darüber hinaus angedeutet, daß wenigstens ein zusätzlicher Sensor 13 vorgesehen ist, welcher beispielsweise zur Ermittlung der Temperatur während einer Durchführung der Ermittlung der Krümmung des Papiers 2 oder zur Ermittlung einer Bewegung des Papiers 2 beispielsweise durch einen Luftzug eingesetzt wird, so daß durch Heranziehung der Ergebnisse bzw. Meßwerte dieses wenigstens einen zusätzlichen Sensors 13 eine entsprechende Korrektur bzw. Kalibrierung der Ergebnisse der von den Sensoren 4 bzw. 11 erhaltenen Meßwerte möglich wird. Falls der Sensor 13 zur Ermittlung der Bewegung des Papiers, beispielsweise zur Ermittlung einer Luftströmung im Bereich der Meßvorrichtung eingesetzt wird, kann beispielsweise vorgesehen sein, daß die tatsächliche Ermittlung des Abstands zwischen den einzelnen Sensoren 4 bzw. 11 und der Oberfläche des zu vermessenden Papiers 2 erst dann vorgenommen wird, wenn eine gegebenenfalls vorhandene Luftströmung unter einen vorgegebenen Schwellwert abgesunken ist, um eine Verfälschung der Meßergebnisse durch eine gegebenenfalls vorliegende Luftströmung zu vermeiden oder zu minimieren.

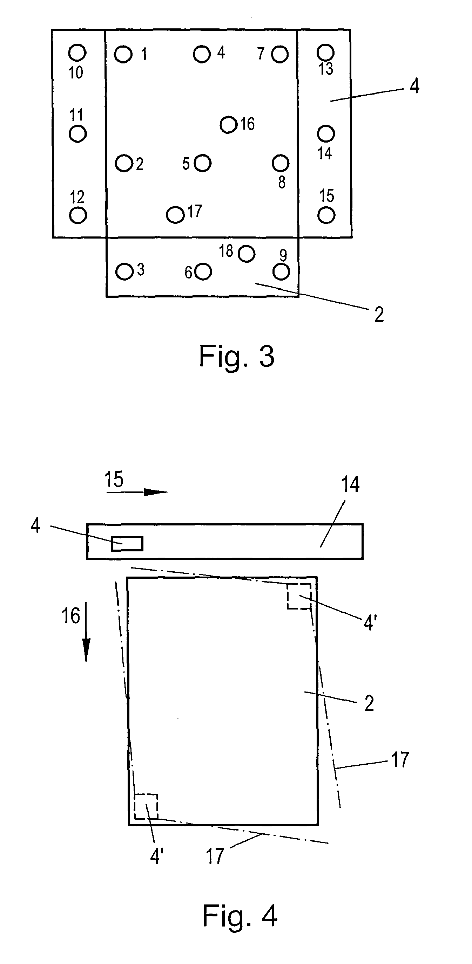

In Fig. 3 ist schematisch die Anordnung einer Vielzahl von Sensoren 4 angedeutet, wie sie beispielsweise in einer der Halterungen 3 bzw. 10 der Ausführungsformen gemäß Fig. 1 und 2 vorgesehen sein können. In Fig. 3 ist darüber hinaus angedeutet, daß durch entsprechende Positionierung der Sensoren im Rahmen des nachfolgenden Auswertverfahrens festgestellt werden kann, ob beispielsweise ein Blatt Papier, welches wiederum mit 2 angedeutet ist, in Hochformat oder Querformat angeordnet ist, da in diesem Fall jeweils unterschiedliche Sensoren, welche in der Darstellung gemäß Fig. 3 mit 1 bis 18 numeriert sind, ein auswertbares Signal liefern können bzw. werden.

In der schematischen Darstellung gemäß Fig. 4 ist eine abgewandelte Ausführungsform einer Anordnung wenigstens eines Sensors angedeutet, wobei ein zu vermessendes Blatt wiederum mit 2 angedeutet ist. An einer in Fig. 4 mit 14 bezeichneten Halterung ist ein wiederum mit 4 bezeichneter Sensor angeordnet, wobei der Sensor 4 in Richtung des Pfeils 15 in der Längsrichtung der Halterung 14 bewegbar ist. Zusätzlich ist die Halterung 14 in Richtung des Pfeils 16 bewegbar, so daß durch eine Bewegung des Sensors 4 entlang der Richtung 15 innerhalb der Halterung 14 sowie eine Bewegung der Halterung 14 entlang des Pfeils 16 die gesamte Oberfläche des Papiers bzw. Gegenstands 2 abgetastet werden kann und so aus einer Vielzahl von Punkten, welche an unterschiedlichen Positionen des Blatts 2 liegen, nachfolgend eine Ermittlung des Abstands und nachfolgend der Krümmung des Blatts 2 vorgenommen werden kann.

Anstelle des in Fig. 4 angedeuteten, idealerweise im wesentlichen punktförmigen Sensors 4, welcher entlang des Pfeils 5 in der Halterung 14 bewegbar ist, kann ein balken- bzw. zeilenförmiger Sensor innerhalb der Halterung 14 vorgesehen sein, welcher sich im wesentlichen über die gesamte Breite der Halterung 14 und somit die gesamte Breite des zu vermessenden Papiers 2 erstreckt, so daß lediglich eine Bewegung der Halterung 14 entlang des Pfeils 16 für ein Überstreichen im wesentlichen der gesamten Oberfläche des zu vermessenden Papiers 2 erforderlich ist.

Während bei der Ausführungsform gemäß Fig. 3 die in einer Halterung montierten bzw. vorgesehenen Sensoren 4 eine festgelegte Position in der Vorrichtung und insbesondere relativ zu einer Halterung 3 bzw. 10 bzw. zu einem zu vermessenden Papier 2 aufweisen, muß bei Verwendung wenigstens eines bewegbaren Sensors 4 auch jeweils die relative Position des Sensors zum Meßzeitpunkt ermittelt bzw. berücksichtig werden.

In Fig. 4 ist darüber hinaus strichliert eine weitere abgewandelte Anordnungsmöglichkeit von Sensoren angedeutet, wobei beispielsweise in Eck- bzw. Randbereichen angeordnete Sensoren 4', welche jeweils von einer Kamera, beispielsweise einer Videokamera gebildet sein können, entsprechend den mit 17 jeweils bezeichneten Gesichtsfeldern eine Aufnahme der gesamten Oberfläche des zu vermessenden Papiers 2 ermöglichen, worauf in weiterer Folge eine Auswertung der Krümmung des Papiers 2 unter Zugrundelegung der von den Sensoren 4' ermittelten Aufnahmen vorgenommen werden kann.

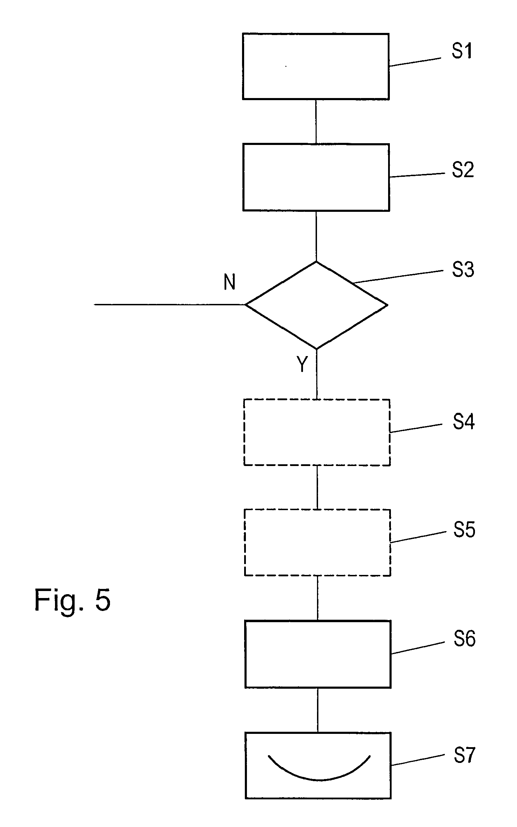

In dem in Fig. 5 schematisch dargestellten Flußdiagramm erfolgt in einem Schritt S1 ein Festlegen wenigstens eines Bezugspunkts des flächigen Gegenstands bzw. Papiers 2, beispielsweise durch die in Fig. 2 angedeutete Klemmvorrichtung 9, oder eine Anordnung wenigstens eines Papiers oder eines Papierstapels 2 auf einer Halterung 1, wie dies in Fig. 1 angedeutet ist.

In einem nachfolgenden Schritt S2 erfolgt eine Bestimmung des Abstands wenigstens eines weiteren, vom Bezugspunkt beabstandeten Punkts der Oberfläche flächigen Gegenstands zu einem Sensor 4, worauf in einem Schritt S3 günstigerweise und zur Vereinfachung des Auswerteverfahrens eine Feststellung erfolgt, ob der an dem wenigstens einem Punkt festgestellten Abstand innerhalb oder außerhalb eines vorgegebenen Schwellwerts oder einer vorgegebenen Bandbreite von zu erwartenden Abstandswerten liegt.

Für den Fall, daß die Überprüfung in Schritt S3 negativ ist, erfolgt eine Ausscheidung auf Basis des Fehlersignals dieses Sensors; wodurch beispielsweise bei der in Fig. 3 dargestellten Anordnung einer Vielzahl von Sensoren 4 unmittelbar festgestellt werden kann, ob es sich bei dem zu vermessenden Papier 2 um ein Papier in Hochformat oder Querformat handelt, da, wie aus den in Fig. 3 schematisch angedeuteten Umrißlinien ersichtlich ist, jeweils bei einem Hochformat bzw. Querformat einige der außenliegenden Sensoren kein Meßergebnis liefern werden, welches sich auf die Oberfläche des zu vermessenden Papiers 2 bezieht.

Falls die Überprüfung in Schritt S3 positiv ist, kann in einem nachgeschalteten fakultativen Schritt S4 ein Vergleich des für den jeweiligen Sensor 4 ermittelten Abstands mit einem Sollwert, beispielsweise dem Abstand des Bezugspunkts oder eines als Bezugspunkt definierten Sensorwerts erfolgen, so daß unter Berücksichtigung des Vergleichsergebnisses, ob der ermittelte Abstand für den jeweiligen Sensor größer oder kleiner als der Sollwert ist, eine Richtung einer Krümmung ermittelt werden kann.

Auf Basis der im fakultativen Schritt S4 ermittelten Richtung der Krümmung kann in einem weiteren fakultativen Schritt S5 eine Vorauswahl des anzupassenden Modells sowie einiger Parameter durch numerische Verfahren, beispielsweise ein Montecarlo-Verfahren ermittelt werden, worauf in dem nachfolgenden Schritt S6 eine Ermittlung der Krümmung des Gegenstands aus dem in Schritt S2 ermittelten Abstand des zumindest einen weiteren Punkt und der Lage des Bezugspunkts unter Zugrundelegung des beispielsweise in Schritt S5 ermittelten bzw. vorgegebenen Modells einer Krümmung der Oberfläche des Gegenstands vorgenommen wird, worauf in Schritt S7 eine Anzeige der ermittelten Krümmung und gegebenenfalls weiterer Auswerteparameter erfolgt.

In einer vereinfachten Ausführungsform kann beispielsweise unmittelbar nach Schritt S3 zu Schritt S6 zur Ermittlung der Krümmung des flächigen Gegenstands übergegangen werden, falls beispielsweise unter Heranziehung weiterer externer Parameter ein fest vorgegebenes Modell zur Auswertung und Ermittlung der Krümmung des zu untersuchenden Gegenstands 2 eingesetzt wird, so daß die vorangehenden Schritte S4 und S5 zur im wesentlichen automatischen und selbsttätigen Auswahl von anzupassenden Modellen entfallen können.

In Fig. 6 und 7 sind zwei Beispiele von ermittelten Krümmungen dargestellt, wobei diese der Deutlichkeit halber teilweise stark übertrieben dargestellt sind.

Bei der Darstellung gemäß Fig. 6 wurde eine kreiszylindrische Oberfläche ermittelt, wobei aus den Parametern betreffend die Lage der Achse der kreiszylindrischen Oberfläche als auch den Krümmungsradius Aussagen über die Beschaffenheit des untersuchten Gegenstands, insbesondere eines Papierblatts bzw. obersten Papierblatts 2 in einem Stapel gegeben werden können. Eine Anpassung an eine kreiszylindrische Oberfläche erweist sich auch beispielsweise zur Heranziehung von Industriestandards bzw. Normen als günstig bzw. sinnvoll, da beispielsweise Qualitätsparameter von Papier im Hinblick auf einen Krümmungsradius eines derartigen angenommenen Kreiszylinders bzw. des Kehrwerts hievon angegeben werden.

Bei der Darstellung gemäß Fig. 7 ist eine kompliziertere Form von Krümmungen bzw. Wölbungen dargestellt, deren Achsen einander schneiden bzw. kreuzen. Weiters ist angedeutet, daß insbesondere in der Darstellung gemäß Fig. 7 die rechts außen liegende Kante offensichtlich stärker gekrümmt ist als andere Eck- bzw. Kantenbereiche, woraus sich eine ungleichmäßige Ausbildung der Wölbung des Papiers in unterschiedlichen Richtungen, welche auch als Rollen und Schüsseln bezeichnet werden, ableiten läßt.

Zur Überprüfung der Güte des Auswerteergebnisses kann darüber hinaus vorgesehen sein, daß selbst bei Vorliegen einer Krümmung bei Vorliegen einer Mehrzahl von Meßpunkten versucht wird, eine Ebene durch die ermittelten Abstände zu fitten bzw. anzupassen, wobei in diesem Zusammenhang üblicherweise schlechtere Anpassungs- bzw. Fitergebnisse als bei Verwendung eines entsprechenden vorgegebenen bzw. ermittelten Modells einer Krümmung unter Zugrundelegung wenigstens eines Rotationskörpers bzw. eines Teilbereichs davon erzielbar sind, so daß auch aus einem derartigen Vergleich eines Ebenenfits und einer Anpassung an einen Rotationskörper, beispielsweise eine kreiszylindrische Oberfläche, auf die Güte der durchgeführten Anpassung Rückschlüsse möglich sind.

Die Anpassung bzw. Ermittlung der Parameter unter Einsatz eines vorgegebenen bzw. ermittelten Modells erfolgt beispielsweise mit einem Verfahren der kleinsten Quadrate auf Basis bekannter Auswertungsmethoden und -verfahren.

Nachfolgend wird ein Ausführungsbeispiel für einen Fit- bzw. Anpassungsvorgang unter Verwendung einer kreiszylindrischen Oberfläche gegeben.

Im allgemeinen läßt sich ein Zylinder durch seinen Radius und durch seine Achsenrichtung $\mathbf{e}$ = ($e_1$, $e_2$, $e_3$) mit $\|\mathbf{e}\|^2$ = 1 und einen Punkt $\mathbf{q}$ = ($q_1$, $q_2$, $q_3$) auf der Achse charakterisieren. Vereinfacht man auf Zylinderflächen mit kleinem Nickwinkel β (Abweichung der Zylinderachse von der Lotrechten, weg vom Beobachter) und nur Teilen von Zylinderflächen, so kann man eine Strafkostenfunktion wie folgt formulieren:

$$zy = vz * \sqrt{r^2 - ((x+u) * COS(\alpha) + (y+v) * SIN(\alpha))^2} + w + SIN(-\beta) * y \qquad \text{(Gleichung 1)}$$

der Zylinderfläche und damit ergibt sich die Strafkostenfunktion mit

$$S = \sum_{allePunkte} (z - zy)^2$$

wobei

r   der Radius
α   der Verdrehungswinkel in der Ebene senkrecht zur Betrachtungsrichtung
x, y, z   die Koordinaten in der Ebene senkrecht zur Betrachtungsrichtung
u, v, w   die Parallelverschiebung des Zylinders in den x,y-Koordinaten
vz   das Vorzeichen für zum Betrachter oder vom Betrachter weg gekrümmter Fläche, und
S   die Strafkostenfunktion ist, die zu minimieren ist.

Die Erfahrung zeigt, daß eine Verwendung einer exakten Drehung mit

$$A(\beta) = \begin{pmatrix} \cos\beta & 0 & \sin\beta \\ 0 & 1 & 0 \\ -\sin\beta & 0 & \cos\beta \end{pmatrix}$$

und

$$B(\gamma) = \begin{pmatrix} 1 & 0 & 0 \\ 0 & \cos\gamma & \sin\gamma \\ 0 & -\sin\gamma & \cos\gamma \end{pmatrix}$$

keine praktischen Vorteile bringt, da die anerkannte Bewertung der Krümmung im Industriebereich auf einer kreisförmigen Schnittlinie mit der horizontalen Ebene fußt, was offensichtlich bei einer exakten Drehung nicht der Fall ist.

Die Strafkostenfunktion kann nun beispielsweise mit der "Downhill Simplex Method in Multidimensions" nach Nelder und Mead minimiert werden, um die besten Parameter des gesuchten Zylinders zu bekommen.

Um eine gewisse Sicherheit über die Natur des Minimums zu bekommen (global oder lokal), kann man verschiedene Strategien verfolgen. Die Erfahrung zeigt, daß die wiederkehrende Suche, ausgehend von anderen Startpunkten, nach den besten Zylinderparametern hier sehr hilft. Das wahrscheinlichste, globale Minimum des Radius als Maß für die Krümmung liegt meist rund um den Median des Radiusraumes. Man kann nun einen gewissen Prozentsatz rund um den Median, z.B. 10 % der erzielten Werte, nach dem besten $\chi^2$ durchsuchen und diesen Parametersatz als Resultat verwenden.

Bei entsprechend komplizierteren, zugrundeliegenden Formen erfolgt anstelle der Gleichung 1 der Einsatz entsprechend abgewandelter Strafkostenfunktionen.

Insbesondere für den Fall komplizierterer Modelle, beispielsweise unter Verwendung einer Kombination einer Mehrzahl von Rotationskörpern, wie dies in Fig. 7 angedeutet ist, sind darüber hinaus gegebenenfalls weitere Untersuchungen im Hinblick auf die Plausibilität ermittelter Ergebnisse durchzuführen.

Die ermittelte Krümmung der Oberfläche des Gegenstands bzw. Papiers 2, welche beispielsweise in Schritt S7 in dem Flußdiagramm gemäß Fig. 5 oder in den Anzeigevorrichtungen 7 der Fig. 1 und 2 dargestellt bzw. angezeigt wird, kann beispielsweise im Zusammenhang mit einer Qualitätssicherung im Rahmen eines Papierherstellungsprozesses eingesetzt werden. In Kenntnis der Lage des untersuchten Papiers 2 innerhalb einer Papierbahn können Herstellungsparameter eine vorgeschalteten Papiermaschine beeinflußt werden, um eine unerwünschte Krümmung zu vermeiden bzw. zu reduzieren, oder in Spezialfällen eine gewünschte Krümmung einzustellen, welche beispielsweise im Rahmen eines nachfolgenden Lagerungsprozesses ausgeglichen werden kann oder für spezielle Einsatzzwecke erforderlich und gewünscht ist.

Insbesondere bei Verwendung einer Vielzahl von Meßpunkten, wie dies beispielsweise in Fig. 3 angedeutet ist oder durch die in Fig. 4 dargestellte Möglichkeit eines zeilen-und/oder spaltenförmigen Abtastens im wesentlichen der gesamten Oberfläche des Papiers 2 möglich wird, läßt sich bei Bereitstellung einer entsprechend großen oder schnellen Rechen- bzw. Auswerteleistung eine genaue Darstellung der tatsächlichen Krümmung des überprüften Papiers 2 zur Verfügung stellen.

Aus Fig. 3 ist in diesem Zusammenhang weiters ersichtlich, daß neben einer Mehrzahl von Sensoren 4, welche insbesondere in den Randbereichen des zu überprüfenden Papiers 2 sowohl im Hochformat als auch im Querformat angeordnet sind, da derartige Randbereiche die größte Abweichung bzw. Auslenkung von einer ebenen Form aufweisen, auch weitere Sensoren im wesentlichen ungleichmäßig bzw. asymmetrisch im Bereich der Oberfläche bzw. Fläche des Papiers 2 angeordnet sind, um die Auswertung insbesondere bei Vorliegen von ungleichmäßigen Krümmungen oder Wölbungen, wie dies beispielsweise in Fig. 7 angedeutet ist, zu erleichtern.

Es läßt sich somit eine überaus genaue Ermittlung der tatsächlichen Wölbung bzw. Krümmung der Oberfläche des Gegenstands bzw. Papiers 2 zur Verfügung stellen, wobei diese Ermittlung vollkommen berührungslos und ohne mechanische Einwirkung auf den Gegenstand 2 erfolgt.

Anstelle oder zusätzlich zu einer Verwendung des Verfahren oder der Vorrichtung unmittelbar im Zusammenhang mit einem Papierherstellungsprozeß kann beispielsweise auch vorgesehen sein, eine Überprüfung bzw. Bestimmung der Wölbung bzw. Krümmung, beispielsweise von Papier 2 vor einem nachgeschalteten Druck- oder Kopierprozeß durchzuführen, um beispielsweise Druck- bzw. Kopierparameter auf eine gegebenenfalls unterschiedliche Papierqualität einstellen zu können. Insbesondere bei Feststellung einer ein gewisses Maß überschreitenden Krümmung könnte beispielsweise ein Kopier-oder Druckvorgang entsprechend verlangsamt werden, um Probleme bei der Durchführung eines derartigen Druck- bzw. Kopiervorgangs, beispielsweise im Hinblick auf einen bei größerer Krümmung zu erwartenden Papierstau reduzieren bzw. vermeiden zu können.

**Patentansprüche**

1. Verfahren zum Bestimmen der Krümmung einer Oberfläche eines beispielsweise blatt- bzw. plattenförmigen Gegenstands (2), beispielsweise Papier oder Karton, umfassend die folgenden Schritte:

   - Festlegen wenigstens eines Bezugspunkts (9) der Oberfläche des Gegenstands (2) und/oder Halten des Gegenstands (2) an dem Bezugspunkt,
   - Bestimmen des Abstands wenigstens eines weiteren vom Bezugspunkt beabstandeten Punkts der Oberfläche des Gegenstands (2) zu einem Sensor (4), der in einem vorbestimmten oder vorbestimmbaren Abstand von einer den Bezugspunkt enthaltenden Ebene liegt, und
   - Ermitteln der Krümmung der Oberfläche des Gegenstands (2) aus dem Abstand des weiteren Punkts und der Lage des Bezugspunkts (9), insbesondere unter Zugrundelegung eines vorgegebenen Modells einer Krümmung der Oberfläche des Gegenstands (2),

   wobei als Modell einer Krümmung ein Rotationskörper bzw. ein Teilbereich davon, insbesondere eine kreiszylindrische Oberfläche gewählt wird.

2. Verfahren nach Anspruch 1, **dadurch gekennzeichnet, daß** eine Bestimmung des Abstands der Oberfläche des Gegenstands (2) zu jeweils einem Sensor (4, 4', 11) an einer Mehrzahl von über die Oberfläche des Gegenstands (2) verteilten Punkten bzw. Positionen vorgenommen wird.

3. Verfahren nach Anspruch 1 oder 2, **dadurch gekennzeichnet, daß** ein Bestimmen des Abstands der Oberfläche des Gegenstands (2) an einer Mehrzahl von Punkten entlang der Randbereiche des flächigen Gegenstands (2) vorgenommen wird.

**4.** Verfahren nach Anspruch 1, 2 oder 3, **dadurch gekennzeichnet, daß** bei Feststellung eines Abstands außerhalb eines vorgegebenen Schwellwerts oder einer vorgegebenen Bandbreite der ermittelte Abstand beispielsweise zu einer Ermittlung eines Vorzeichens und/oder Information der Krümmung der Oberfläche des Gegenstands (2) herangezogen wird.

**5.** Verfahren nach einem der Ansprüche 1 bis 4, **dadurch gekennzeichnet, daß** vor Durchführung der Abstandsmessung weitere Parameter des Gegenstands (2), beispielsweise Temperatur, Bewegung oder dgl. festgestellt werden.

**6.** Verfahren nach einem der Ansprüche 1 bis 5, **dadurch gekennzeichnet, daß** eine Mehrzahl von Gegenständen (2) übereinander in einem Stapel angeordnet wird und daß eine Feststellung des Abstands von jeweils wenigstens einem Punkt an den Oberflächen des Stapels der Gegenstände (2) vorgenommen wird.

**7.** Verfahren nach einem der Ansprüche 1 bis 6, **dadurch gekennzeichnet, daß** die Krümmung durch ein Fitten der ermittelten Abstände an das vorgegebene Modell, beispielsweise mit einem Verfahren der kleinsten Quadrate vorgenommen wird.

**8.** Verfahren nach einem der Ansprüche 1 oder 7, **dadurch gekennzeichnet, daß** Parameter des anzupassenden Modells durch numerische Verfahren, beispielsweise ein Montecarlo-Verfahren ermittelt werden.

**9.** Vorrichtung zum Bestimmen der Krümmung einer Oberfläche eines beispielsweise blatt- bzw. plattenförmigen Gegenstands (2), beispielsweise Papier oder Karton, umfassend:

- eine Halterung (19) zur Aufnahme des Gegenstands (2) und/oder zur Festlegung eines Bezugspunkts (9) der Oberfläche des Gegenstands (2);
- wenigstens einen Sensor (4, 4', 11) zur Ermittlung des Abstands eines vom Bezugspunkt verschiedenen Punkts der Oberfläche des Gegenstands zu dem Sensor, der in einem vorbestimmten oder vorbestimmbaren Abstand von einer den Bezugspunkt enthaltenden Ebene liegt; und
- Mittel (6) zum Ermitteln des Abstands zwischen dem Punkt auf der Oberfläche des Gegenstands (2) und dem Sensor (4, 4', 11) sowie zum Ermitteln der Krümmung der Oberfläche des Gegenstands (2) aus dem ermittelten Abstand und der Lage des Bezugspunkts, insbesondere unter Zugrundelegung eines vorgegebenen Modells einer Krümmung

wobei als Modell einer Krümmung ein Rotationskörper bzw. ein Teilbereich davon, insbesondere eine kreiszylindrische Oberfläche gewählt ist.

**10.** Vorrichtung nach Anspruch 9, **dadurch gekennzeichnet, daß** eine Mehrzahl von Sensoren (4, 11) in einer gemeinsamen Halterung (3, 10) aufgenommen ist.

**11.** Vorrichtung nach Anspruch 9 oder 10, **dadurch gekennzeichnet, daß** wenigstens ein Sensor (13) zur Bestimmung zusätzlicher Parameter des Gegenstands, wie beispielsweise Temperatur, Bewegung oder dgl., vorgesehen ist.

**12.** Vorrichtung nach Anspruch 9, 10 oder 11, **dadurch gekennzeichnet, daß** wenigstens ein Sensor (4) relativ zur Oberfläche des Gegenstands (2) bewegbar ist.

**13.** Vorrichtung nach einem der Ansprüche 9 bis 12, **dadurch gekennzeichnet, daß** als Sensoren (4, 4', 11) kapazitive Sensoren, Lasersensoren auf einem Laufzeitprinzip, Lasersensoren auf einem Triangulationsprinzip, Ultraschallsensoren, induktive Sensoren, Videokameras oder dgl. vorgesehen sind.

**14.** Verwendung eines Verfahrens nach einem der Ansprüche 1 bis 8 oder einer Vorrichtung nach einem der Ansprüche 9 bis 13 im Rahmen eines Papier- oder Kartonherstellungsprozesses, beispielsweise zur Qualitätssicherung.

**15.** Verwendung eines Verfahrens nach einem der Ansprüche 1 bis 8 oder einer Vorrichtung nach einem der Ansprüche 8 bis 13 vor einem Einbringen bzw. Zuführen von Papier in einen nachfolgenden Be- bzw. Verarbeitungsvorgang, beispielsweise vor einem nachgeschalteten Druck- oder Kopiervorgang.

Fig. 1

Fig. 2

Fig. 3

Fig. 4

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5515152 B
- US 4951935 B
- US 6668155 B
- EP 0816931 B
- WO 0056976 A
- US 5394247 B
- US 20040243270 A
- US 4747911 B
- US 4926358 A
- US 20050097950 A